# EUROPEAN PATENT APPLICATION

(11) **EP 1 276 067 A2**
(43) Date of publication of application: **15.01.2003**
(21) Application number: 02077335.4
(22) Date of filing: 13.06.2002
(51) Int. Cl.: G06F 17/60

(54) **Interactive system**

(30) Priority: 09.07.2001 EP 01305896
(71) Applicant: UNILEVER N.V., 3013 AL Rotterdam (NL); UNILEVER PLC, London EC4P 4BQ (GB)
(72) Inventor: Treloar, Robert Lindsay, Unilever Research, Wirral, Merseyside CH63 3JW (GB)
(74) Representative: Joppe, Hermina L. P.

(57) **Abstract**

A method for the targeted provision of consumer information comprising the steps of:
(i) provision of a device capable of transmitting a signal to an interactive media device wherein said signal is unknown to said interactive media device
(ii) bringing the device into reaching distance of a media device such that the signal is received by the media device;
(iii) provision of targeted information by the media

## Description

### Field of the Invention

The present invention relates to an interactive system, in particular to a system for the targeted transfer of information.

### Background of the Invention

Consumer products are sold in many varieties and forms. For example consumer products may relate to consumables such as foods or cosmetic or cleaning products. Alternatively consumer products can be intended for repeated or longer use for example books, cars, furniture, household devices etc.

Often it is desirable that after the sale of consumer products some information is provided to the consumer. This information can be in any form for example it can relate to advice concerning the possibilities for use of the product, it can be a manual for operation of the goods, it can be advertisement promoting the product, it can be a reward for buying the product or it can be a reminder to use the product. It may be desirable for the supplier of the products to transfer these or various other pieces of information to the consumer.

A problem with the transfer of information to the consumer is that nowadays consumers are confronted with many sources of information. For example newspapers and magazines appear regularly and also electronic messages such as for example via the TV screen, via the radio, (mobile) phone or via the Internet are possible providers of information. Given the wide range of possibilities for providing information it is difficult for the supplier to make sure that the appropriate information is transferred to and received by the consumer at the desired moment.

The object of the present invention is to provide a system, which allows the targeted transfer of information from a supplier to a customer.

It has now been found that targeted information can advantageously be brought to the customer via an interactive media device such as for example an interactive television.

Interactive media devices are known in the art and these include for example interactive television, interactive computers, interactive mobile phone etc. Normally an interactive media device is in continuous receipt of information from a provider, which supplies the relevant information. The customer can then select the appropriate information content for example by selecting the desired channel on the interactive television.

For example an interactive television (iTV) when switched is usually in continuous receipt of information from the provider of television programmes for example via a satellite or via a cable connection. This provider will continuously send the programme information to the television connection. For selection and display of the relevant information an interactive television usually contains a set top box which is capable of receiving and recognising a number of signals. As soon as a viewer sends a relevant signal to the television and said signal is received and recognised by the set top box, the STB of the iTV will determine which television programme corresponds to said signal and the television will then start to display this programme.

Such a system can be used to display information. However, such a system is less suitable for the simple transfer or non-randomised provision of targeted consumer information to individual consumers without the consumer having to pursue a series of active steps to access the information for the following reasons:
For a supplier to provide information to a customer the supplier has to rely on the customer making a series of active steps to calling upon the source of the supplier's information (for example calling a dedicated phone line, selecting a web-site etc).

Alternatively, the supplier can provide information via advertising on TV channels etc thereby relying on a consumer accidentally watching the advert. Although this method has the advantage that normally the consumer needs no active information retrieval step, it has the disadvantage that the method is very expensive. Additionally this method has a low percentage of success because it relies on a randomised provision of information. There is a low probability that the targeted consumer is watching the interactive media at the moment the targeted information is provided.

The object of the present invention is to provide a system where consumer product information can be communicated directly to a targeted customer via an interactive media source. The customer is not required to make a selection from various information sources not to carry out a series of active steps to get the information, neither has the supplier to rely on the customer accidentally encountering the supplier's information.

Another object of the present invention is to provide a cheap way of providing targeted information to the customer.

### Summary of invention

It has now been found that a very effective and cheap transfer of targeted information to the consumer can be achieved by a specific method whereby provision of targeted information by an interactive media is initiated by a suitable device transmitting a specified signal.

Accordingly in a first aspect the invention relates to a method for the targeted provision of consumer information comprising the steps of:
(i) provision of a device capable of transmitting a signal to an interactive media device wherein said signal is receivable by but unknown to said interactive media device
(ii) bringing the device into reaching distance of a media device such that the signal is received by the media device
(iii) provision of targeted information by the media device as a result of said signal.

In a second embodiment the invention relates to a system for the targeted provision of information comprising an interactive media device, said device comprising
(i) means for receiving a first signal from a first device, wherein said signal is unknown to the media device; and
(ii) means to transfer after receipt of said first signal said signal or a representation thereof to a provider; and
(iii) means for subsequently receiving from said provider targeted information; and
(iv) output means for delivering the targeted information.

### Detailed Description of the Invention

Previously systems have been described involving the transfer of information between an electronic device and a receiving device.

For example US 5,752,880 describes a wireless computer controlled toy system whereby the toy receives a first transmission via a wireless receiver and the toy carries out at least one action based on said transmission.
US 5,289,273 describe a control system for remotely controlling an animated character.

Both systems have the disadvantage that they are fairly complicated and expensive and can not easily be used for the targeted provision of information to the consumer.

WO 01/33839 provides a method of displaying content from multiple information sources to a viewer. The method described provides information after a viewer profile has been established.

EP 1,085,437 and EP 1,085,440 describe a system for the gathering of information and personalisation techniques. The system comprises the gathering of data by a portable device whereafter this data is transmitted to a personal computer or the like. This recognises the signals and after analysis personalised information is provided to the user. While this system allows the personalisation of information it has the disadvantage that the data gathering device and the receipt device must be closely adapted to each other in order to be capable to receive and recognise the signals

WO 00/76217 describes the interaction between a smart toy a set top box and a broadcast station. While this system might be used for the provision of personalised information, the signals from the smart toy to the set top box must be known and hence it requires a complicated arrangement to do this.

Similarly US 5,905,521 describes the interaction of a user with a digital TV. Again, however the way of communication is via known signals.

Surprisingly it has been found that if an unknown signal is transmitted to the media device, this can be used for cheap and effective provision of targeted information to the user.

The interactive media device for use in accordance to the invention can be any device capable of providing information for example an interactive TV, radio, phone, mobile phone, DVD player, CD player, computer etc. Preferably the interactive media device is an interactive television.

The interactive media device will preferably include means capable of receiving a signal from a device. Such receiver means can take any suitable form for example an antenna, a microphone, light sensor etc. Preferably the receiving means in the media device is an infrared port.

The interactive media device will also preferably include means to transfer after receipt of said first signal said signal or a representation thereof to a provider. Preferably the media device will be pre-programmed that upon receipt of an unknown signal the signal (or a representation thereof) will be send to a provider. Typical means to achieve this can be transmitting devices e.g. to satellite systems, modems, telephone connections, connections via cable or Internet etc.

The interactive media device will also preferably comprise means for subsequently receiving from said provider targeted information. Again said means can be any suitable input means e.g. connections via antenna, microphone, satellite, cable, telephone line or Internet etc.

Preferably the interactive media device is an interactive television (iTV) such as interactive digital television. Such television systems consist in essence of two components, the TV display and most importantly the set top box (STB) which may be a seperated device or integrated in the hardware of the iTV. The TV display is for displaying the targeted information based on instructions from the set top box.

For receiving interactive television services via the set top box, several elements may be involved: Firstly, the set top box har-dware: this is usually provided via the hardware supplier. Secondly, the infrastructure for presenting the programme package and collecting the payment: a service provider usually provides this. Thirdly, the specific content for the programming/advertising: a content provider can provide this. Fourthly, the software used to ensure an adequate interaction between hardware, service provider and content provider.

Often several parties can provide one or more of the above elements. For example, in the case of interactive digital television, Sky TV acts both as a service and a content provider.

The Set top box of an interactive television can best be considered as a functional computer. It generally has an operating system and software API (applications programming interface). Any application written for this API can in principal run on the STB.

At present there is not a single standard API for all STB's. Normally the service provider will select the API they will use; for example they can select the javaTV extension of the java programming language as their API. The API allows the application to call functions that among other things, capture events from the remote control, manipulate the available media streams and communicate with the provider via the phone (e.g. the functions may include a set of internet functions that allows file transfer over a phone line).

If a content provider wishes to supply content to a service provider the former must supply the content in such a way that it works with the provider's API.

An iTV program can then be considered as the result of one such application being "run" on the set top box. The application could be very simple (e.g. changing a channel), intermediate (e.g. merging in some customised advertising to an existing TV program) or complex (e.g. an interactive TV game).

Some software applications like basic channel changing are permanently installed when the set top box is switched on, others are updated regularly by the service provider (for example electronic programming guides). This update is achieved by for example running a small communications program on the STB that goes and gets the new guide application (using the communications functionality described above) from the provider's computer database. In some cases the installation may be done remotely -i.e. by a small communications program on the database side.

A particularly relevant application on a set top box is the application manager, which is the basic program on every set top box. It may use aspects of the API to achieve its tasks but contains components usually written in a lower level language that communicates with the very core operating systems on the set top box.

For the purpose of the invention the device sending a signal to the interactive media device is a signalling device which may need the separate presence of a software application on the STB.

For the purpose of the invention the device transmits an unknown signal to the interactive media device. In case of an interactive television this means that the set top box will receive the signal which is preferably an infrared signal. Preferably, this signal will be in the standard format for reception by the STB, but will be an unknown signal as regards to its content. In particular the unknown signal is preferably not part of the standard control set of signals for the set top box. Preferably the unknown signal is entirely unknown to the set top box i.e. when the signal arrives at the set top box it is not recognised as (comprising) a known signal and accordingly the set top box flags it as unknown code. Signals composed of a known part (e.g. user identification) and an unknown part (e.g. data) are for the purpose of this invention not regarded as unknown signals. Preferably the set top box is preprogrammed such that upon receipt of an unknown signal this signal or a representation thereof is sent to a provider. Upon receiving said unknown signal from the device, and identifying it as such, the set top box application manager can activate a communications program which communicates the signal or a representation thereof to the service provider (for example via a satellite or phone line) by using the communications functionality in the API.

The computer at the service provider then preferably is capable of recognising the signal or representation thereof, for example via a database of possible signals that it compares to the received unknown signal. When the provider recognises the signal it may confirm this to the STB's communications program which then can retrieve the specific application associated with the signal, from the providers database and installs it on the set top box. It also can place on the set top box some very closely associated information - for example, the knowledge that the signal is now "known" and instructions on what to do when the now known signal is received namely: to run the now installed application. The Set top box applications manager upon next receiving the device signal will run the application, which will provide the targeted information to the consumer. Preferably the unknown signal is directly related to the content stream of the targeted information.

A possible variant is that the communications program runs the desired application as soon as it installs it.

A further variant is that the desired application could be sent to the set top box hidden in the media streams.

The interactive media device will also preferably comprise output means for delivering the targeted information. Examples of this can be display devices, sound emitting devices etc. Preferably a television screen or computer monitor is used for this purpose.

The device for transmitting the signal to the interactive device can advantageously be a promotional device. Promotional devices are articles, which are given as presents in the sale process. Examples of typical promotional articles are cards (e.g. brightly coloured cards such as pokemon cards), counters (e.g. coin shaped articles with an attractive appearance for collecting or for playing), toys for example small animal characters, cartoon characters, small cars etc. An important aspect of promotional articles is that they generally are fairly small (generally less than 10 cm maximum diameter) and fairly cheap to produce (generally the production costs will be less than $ 1, --). To achieve the latter it is generally preferred that the electronically interactive device has no need for an expensive internal power supply e.g. does not need traditional batteries or connection to the mains in order to operate but has a device capable to generate power from an external source such for example a solar cell or a piezo electric device or from a cheap internal source e.g. a tiny battery e.g. such as occasionally used in musical greeting cards.

The promotional device for use in accordance to the invention can be any article preferably a toy, a card or a counter provided it contains means for the pre-programmed provision of signal to a media device.

The device is preferably pre-programmed for transmitting on or more signals that can be received by the media device. For the purpose of this invention the term pre-programmed refers to any mechanical or electronic means which is capable of transmitting a selected signal in a predetermined way. Such signal may be transmitted once or repeatedly e.g. at regular intervals or continuously. The source of the signal could for example be a chip pre-programmed to send a predetermined signal at certain moments for example on a continuous basis or at regular intervals. Alternatively the device for emitting the signal can be a light source for example a light emitting diode e.g. capable of generating IR pulse(s)

Typically the signals to be transmitted can take any form suitable for reception by the media device, for example the signals can be audio (sound waves), visible (light waves), electronic (electromagnetic waves) or other such as radiation, infrared light, UV light etc. Advantageously the signal can be an infrared pulse, which can easily be received by media devices, which are, build to be used in combination with a remote control.

In a first advantageous embodiment of the invention this signal is sent by the device without interference or active step by the consumer. In such an embodiment it can be advantageous if the signal is continuously or at regular intervals transmitted by the device such that as soon as the device is within reach of the media device the pre-programmed signal will be sent from the device to the media device.

In a second advantageous embodiment of the invention the device needs to be activated by the consumer before it sends out a signal to the media device. This can for example be an on/off switch on the device, which activates the device to send out the pre-programmed signal either for a limited time, or on a regular or continuous basis.

The media device will then as a result of the signal from the device provide targeted information to the customer.

In a preferred embodiment of the invention the targeted information is not yet available in the media device but needs to be provided by an external source, a so-called provider. In this embodiment the media device will receive the unknown signal and as a result of the receipt a second signal will be sent from the media device to the provider. The provider will then as a result of the second signal select the appropriate targeted information and identify or provide this to the media device. The media device then provides this selection of information to the customer.

The second embodiment can advantageously be applied in conjunction with an interactive television comprising a set top box (STB) and TV display. The STB will then receive a signal from the device. Said signal is preferably an infrared pulse. Usually such a set top box is capable of recognising a limited number of signals whereby each recognised signal corresponds to a programme or programme channel. For the purpose of the invention the signal is in standard format but the contents of the signal is unknown to the STB of the media device. The set top box receives such an unknown signal and as a result will pass on the presence of the unknown signal to the provider. This will activate the provider to identify the unknown signal, to select the appropriate targeted information and to transmit it to the television, which will then display the targeted information.

In a third embodiment according to the invention several devices are provided each of them capable of transmitting a signal to an interactive media device as described above. The signal generated is particular to the individual device said signal being such that upon being received and passed on by the STB the provider as described is capable to identify the individual device which transmitted the first signal and provides targeted information as described above.

The targeted information to be produced because of the contact between the signal from the device and the media device can be any information useful for the consumer and preferably related to a consumer product.

Examples of suitable targeted information can be advertising relating to a consumer product. Other examples of targeted information are technical information preferably relating to consumer products. Such technical information may for example relate to instruction manuals for operation of consumer products, suitable application conditions for use of consumer products and safety and health instructions for handling and using consumer products. Alternatively, the targeted information can be some reward to the consumer for buying the product, for example if a specific product is sold it may be accompanied by a promotional device which will cause the media device to broadcast a free movie or cartoon series.

The targeted information can be pre-stored on the provider, said provider being connected to the media device, said connection can be via any suitable form e.g. cable connection, satellite connection, internet, phone connections etc.

The invention will now be illustrated in the following example:

### Example I

A first embodiment of the invention concerns a promotional device, which is a fluffy toy (7-cm) sold in combination with a consumer product being food product being washing powder. The promotional device is contained in a plastic bag, which is taped to the box of washing powder. The promotional device is provided with a tiny battery and an on/off switch which when in the on position causes a LED placed inside the toy to send out IR-signals at regular time intervals; the interactive TV is capable of receiving these signals and processing it in its set top box. In this embodiment the IR signal is not recognised by the set top box. The television is programmed such that the unknown signals or representations thereof are sent via the telephone line to a provider of interactive television programmes. This provider recognises the unknown signal or a representation thereof as being related to the washing powder and subsequently sends information relating to the washing powder in the form of a commercial of the washing powder. The information is sent to interactive TV upon receipt of signal or representation thereof and displayed by the interactive TV.

## Claims

1. A method for the targeted provision of consumer information comprising the steps of:
(i) provision of a device capable of transmitting a signal to an interactive media device wherein said signal is unknown to said interactive media device
(ii) bringing the device into reaching distance of a media device such that the signal is received by the media device;
(iii)provision of targeted information by the media device as a result of receiving said signal.

2. A system for the targeted provision of information comprising an interactive media device said device comprising
(a) means for receiving a first signal from a first device, wherein said signal is unknown to the media device; and
(b) means to transfer after receipt of said first signal said signal or a representation thereof to a provider; and
(c) means for subsequently receiving from said provider targeted information; and
(d) output means for delivering the targeted information.

3. System according to claim 2, wherein the media device is an interactive media device such as an interactive television.

4. A system according to claim 2 wherein the signal is an infrared signal received by the infrared port of the media device.

5. System according to claim 2 wherein the media device comprises a set top box and the signal is unknown to said set top box.

6. System according to claim 2 wherein the signal is in the standard format for reception by the media device but will be an unknown signal as regards to its content.

7. System according to claim 2 wherein said first device is pre-programmed for transmittal of the signal.

8. System according to claim 5 wherein the set top box is pre-programmed such that upon receipt of an unknown signal this signal or a representation thereof is sent to a provider.

9. A method according to claim 1 wherein a system according to claim 2 is used.
